# EUROPEAN PATENT APPLICATION

(11) **EP 4 827 159 A1**
(43) Date of publication of application: **21.10.2026**
(21) Application number: 25751022.2
(22) Date of filing: 03.01.2025
(51) Int. Cl.: H04W 24/08, H04W 36/08, H04W 72/0446

(54) **COMMUNICATION METHOD AND RELATED DEVICE**

(30) Priority: 06.02.2024 CN 202410171427
(71) Applicant: Honor Device Co., Ltd., Shenzhen, Guangdong 518040 (CN)
(72) Inventor: SHAN, Baokun, Shenzhen, Guangdong 518040 (CN)
(74) Representative: Goddar, Heinz J.
(86) International application number: PCT/CN2025/070458
(87) International publication number: WO 2025/167420

(57) **Abstract**

Embodiments of this application provide a communication method and a related device. A network device determines first indication information, where the first indication information is at least used for indicating a time domain resource of a wake-up signal WUS of a neighboring cell of a terminal device, and the first indication information is used for neighboring cell measurement by the terminal device. The network device sends the first indication information. Based on the foregoing solution, the network device indicates a WUS configuration of the neighboring cell by configuring the first indication information for the terminal device, so that the terminal device may perform neighboring cell measurement by using the WUS of the neighboring cell. In this way, the terminal device may perform, in an LR state, neighboring cell measurement by using the first indication information, to implement operations such as cell reselection and handover measurement, thereby reducing impact of turning on an MR on a gain of the WUS.

## Description

This application claims priority to Chinese Patent Application 202410171427.1, filed with the China National Intellectual Property Administration on February 6, 2024 and entitled "COMMUNICATION METHOD AND RELATED DEVICE", which is incorporated herein by reference in its entirety.

### TECHNICAL FIELD

This application relates to the communication field, and in particular, to a communication method and a related device.

### BACKGROUND

Wireless communication may be transmission communication performed between two or more communication nodes without propagation through a conductor or a cable or propagation through an air interface. For example, the communication nodes include a network device and a terminal device. Usually, the terminal device may access the network device, and receive scheduling and indication information from the network device, to implement wireless communication.

A terminal device in a lower power wake-up signal (lower power wake up signal, LP-WUS) configuration uses a combination mode of a main receiver (main receiver, MR) and a low power receiver (low power receiver, LR). The MR is in an ultra-deep sleep (ultra-deep sleep) state before being woken up by an LP-WUS. A gain of the LP-WUS comes from replacing conventional physical downlink control channel (physical downlink control channel, PDCCH) monitoring at a paging occasion (paging occasion, PO), thereby reducing power consumption.

However, before monitoring the PO, the terminal device further performs operations such as measurement and cell reselection evaluation. If conventional measurement based on a system synchronization block (system synchronization block, SSB) is still adopted, the terminal further needs to turn on or partially turn on the MR, exerting a significant impact on the gain of the WUS.

### SUMMARY

This application provides a communication method and a related device. A WUS configuration of a neighboring cell is sent to a terminal device, so that the terminal device may perform, in an LR state, neighboring cell measurement by using first indication information, to implement operations such as cell reselection and handover measurement, thereby reducing impact of turning on an MR on a gain of a WUS.

A first aspect of this application provides a communication method. The method is performed by a network device, or the method is performed by some components (for example, a processor, a chip, or a chip system) in a network device, or the method may be implemented by a logic module or software that can implement all or a part of functions of a network device. In the first aspect and possible implementations of the first aspect, an example in which the method is performed by the network device is used for description. In the method, the network device determines first indication information, where the first indication information is at least used for indicating a time domain resource of a wake-up signal WUS of a neighboring cell of a terminal device, and the first indication information is used for neighboring cell measurement by the terminal device. The network device sends the first indication information.

Based on the foregoing solution, the network device indicates a WUS configuration of the neighboring cell by configuring the first indication information for the terminal device, so that the terminal device may perform neighboring cell measurement by using the WUS of the neighboring cell. In this way, the terminal device may perform, in an LR state, neighboring cell measurement by using the first indication information, to implement operations such as cell reselection and handover measurement, thereby reducing impact of turning on an MR on a gain of the WUS.

Optionally, in a possible implementation of the first aspect, the foregoing step further include: determining a level of the first receiver of the terminal device, where different levels correspond to different correction values; and the determining first indication information includes: determining the first indication information based on the level.

In this possible implementation, the network device may further determine, based on an LR level of the terminal device, the correction value indicated by the first indication information, to perform WUS configuration of the neighboring cell with finer granularity for a terminal device of a different LR level, thereby improving accuracy of subsequently adjusting a WUS measurement value in the LR state based on the correction value.

Optionally, in a possible implementation of the first aspect, before the step of the determining a level of the first receiver of the terminal device, the method further includes: receiving second indication information, where the second indication information is used for indicating the level of the first receiver of the terminal device; and determining the level based on the second indication information.

In this possible implementation, the network device may specifically determine the LR level of the terminal device based on the second indication information reported by the terminal device, to configure a corresponding correction value for the terminal device. This can improve scheduling flexibility of the terminal device, and can improve accuracy of subsequently adjusting a WUS measurement value in the LR state based on the correction value.

A second aspect of this application provides a communication method. The method is performed by a terminal device, or the method is performed by some components (for example, a processor, a chip, or a chip system) in a terminal device, or the method may be implemented by a logic module or software that can implement all or a part of functions of a terminal device. In the second aspect and possible implementations of the second aspect, an example in which the method is performed by the terminal device is used for description. In the method, the terminal device receives first indication information, where the first indication information includes at least a time domain resource of a wake-up signal WUS of a neighboring cell of the terminal device. The terminal device performs neighboring cell measurement based on the first indication information.

In this possible implementation, the terminal device may perform neighboring cell measurement by using the first indication information. In this way, the terminal device may perform, in an LR state, neighboring cell measurement by using the first indication information, to implement operations such as cell reselection and handover measurement, thereby reducing impact of turning on an MR on a gain of the WUS.

Optionally, in a possible implementation of the second aspect, the foregoing step further includes: sending second indication information, where the second indication information is used for indicating a level of a first receiver of the terminal device, different levels correspond to different correction values, and the second indication information is associated with the first indication information.

In this possible implementation, the terminal device may report the level of the first receiver, so that the network device may configure, for the terminal device, a correction value that better conforms to the terminal device. This can improve scheduling flexibility of the terminal device, and can improve accuracy of subsequently adjusting a WUS measurement value in the LR state based on the correction value.

Optionally, in a possible implementation of the first aspect or the second aspect, the terminal device includes a first receiver and a second receiver, and operating power of the first receiver is less than operating power of the second receiver. The first indication information is further used for indicating a correction value, the correction value is used for determining a second measurement value of the second receiver that corresponds to a first measurement value of the first receiver, and the second measurement value is used for cell reselection or handover measurement by the terminal device.

In this possible implementation, the correction value is indicated by using the first indication information, so that the terminal device can estimate a neighboring cell measurement result of the MR in the LR state, thereby reducing impact of turning on the MR on the gain of the WUS.

Optionally, in a possible implementation of the first aspect or the second aspect, the first indication information is further used for indicating an application range of the correction value, and the application range includes any one of the following: all neighboring cells of the terminal device or an intra-frequency neighboring cell of the terminal device.

In this possible implementation, the application range of the correction value may be further limited according to an actual requirement, to satisfy requirements of different scenarios.

Optionally, in a possible implementation of the first aspect or the second aspect, different neighboring cells of the terminal device correspond to different correction values.

In this possible implementation, different neighboring cells correspond to different correction values, so that it is convenient to flexibly schedule the terminal device to perform WUS measurement for the neighboring cells.

Optionally, in a possible implementation of the first aspect or the second aspect, the first indication information is used for cell reselection by the terminal device when the terminal device is in an idle state or an inactive state.

In this possible implementation, the terminal device may implement cell reselection by using an LR and the first indication information, to reduce impact of turning on the MR on the gain of the WUS.

Optionally, in a possible implementation of the first aspect or the second aspect, the first indication information is used for handover measurement by the terminal device when the terminal device is in a connected state.

In this possible implementation, the terminal device may implement handover measurement by using the LR and the first indication information, to reduce impact of turning on the MR on the gain of the WUS.

Optionally, in a possible implementation of the first aspect or the second aspect, the first indication information is further used for indicating at least one of the following: a frequency domain resource of the WUS or a code domain resource of the WUS.

In this possible implementation, the frequency domain resource and/or the code domain resource of the WUS of the neighboring cell are/is indicated, so that accuracy of neighboring cell measurement performed by the terminal device can be improved.

A third aspect of this application provides a communication apparatus. The apparatus is a network device, or the apparatus is some components (for example, a processor, a chip, or a chip system) in a network device, or the apparatus is a logic module or software that can implement all or a part of functions of a network device. The communication apparatus includes a transceiver unit and a processing unit.

The processing unit is configured to determine first indication information, where the first indication information is at least used for indicating a time domain resource of a wake-up signal WUS of a neighboring cell of a terminal device, and the first indication information is used for neighboring cell measurement by the terminal device.

The transceiver unit is configured to send the first indication information.

Optionally, in a possible implementation of the third aspect, the processing unit is further configured to determine a level of a first receiver of the terminal device, where different levels correspond to different correction values. The processing unit is specifically configured to determine the first indication information based on the level.

Optionally, in a possible implementation of the third aspect, the transceiver unit is further configured to receive second indication information, where the second indication information is used for indicating the level of the first receiver of the terminal device. The processing unit is specifically configured to determine the level based on the second indication information.

A fourth aspect of this application provides a communication apparatus. The apparatus is a terminal device, or the apparatus is some components (for example, a processor, a chip, or a chip system) in a terminal device, or the apparatus is a logic module or software that can implement all or a part of functions of a terminal device. The communication apparatus includes a transceiver unit and a processing unit.

The transceiver unit is configured to receive first indication information, where the first indication information includes at least a time domain resource of a wake-up signal WUS of a neighboring cell of a terminal device.

The processing unit is configured to perform neighboring cell measurement based on the first indication information.

Optionally, in a possible implementation of the fourth aspect, the transceiver unit is further configured to send second indication information, where the second indication information is used for indicating a level of a first receiver of the terminal device, different levels correspond to different correction values, and the second indication information is associated with the first indication information.

Optionally, in a possible implementation of the third aspect or the fourth aspect, the terminal device includes a first receiver and a second receiver, and operating power of the first receiver is less than operating power of the second receiver. The first indication information is further used for indicating a correction value, the correction value is used for determining a second measurement value of the second receiver that corresponds to a first measurement value of the first receiver, and the second measurement value is used for cell reselection or handover measurement by the terminal device.

Optionally, in a possible implementation of the third aspect or the fourth aspect, the first indication information is further used for indicating an application range of the correction value, and the application range includes any one of the following: all neighboring cells of the terminal device or an intra-frequency neighboring cell of the terminal device.

Optionally, in a possible implementation of the third aspect or the fourth aspect, different neighboring cells of the terminal device correspond to different correction values.

Optionally, in a possible implementation of the third aspect or the fourth aspect, the first indication information is used for cell reselection by the terminal device when the terminal device is in an idle state or an inactive state.

Optionally, in a possible implementation of the third aspect or the fourth aspect, the first indication information is used for handover measurement by the terminal device when the terminal device is in a connected state.

Optionally, in a possible implementation of the third aspect or the fourth aspect, the first indication information is further used for indicating at least one of the following: a frequency domain resource of the WUS or a code domain resource of the WUS.

A fifth aspect of this application provides a communication apparatus, including at least one processor. The at least one processor is coupled to a memory, and the memory is configured to store a program or instructions. The at least one processor is configured to execute the program or the instructions, so that the apparatus implements the method according to any one of possible implementations of the first aspect.

A sixth aspect of this application provides a communication apparatus, including at least one processor. The at least one processor is coupled to a memory, and the memory is configured to store a program or instructions. The at least one processor is configured to execute the program or the instructions, so that the apparatus implements the method according to any one of possible implementations of the second aspect.

A seventh aspect of this application provides a communication apparatus, including at least one logic circuit and an input/output interface. The logic circuit is configured to perform the method according to any one of possible implementations of the first aspect.

An eighth aspect of this application provides a communication apparatus, including at least one logic circuit and an input/output interface. The logic circuit is configured to perform the method according to any one of possible implementations of the second aspect.

A ninth aspect of this application provides a communication system. The communication system includes a communication apparatus according to any one of possible implementations of the fifth aspect and a communication apparatus according to any one of possible implementations of the sixth aspect, or includes a communication apparatus according to any one of possible implementations of the seventh aspect and a communication apparatus according to any one of possible implementations of the eighth aspect.

A tenth aspect of this application provides a computer-readable storage medium. The storage medium is configured to store one or more computer executable instructions. When the computer executable instructions are executed by a processor, the processor performs the method according to any one of possible implementations of any one of the first aspect or the second aspect.

An eleventh aspect of this application provides a computer program product (or referred to as a computer program). When the computer program in the computer program product is executed by a processor, the processor performs the method according to any one of possible implementations of any one of the first aspect or the second aspect.

A twelfth aspect of this application provides a chip or a chip system. The chip or the chip system includes at least one processor, configured to support a communication apparatus to implement the method according to any one of possible implementations of any one of the first aspect or the second aspect.

In a possible design, the chip system may further include a memory. The memory is configured to store program instructions and data that are necessary for the communication apparatus. The chip system may include a chip, or may include a chip and another discrete component. Optionally, the chip system further includes an interface circuit, and the interface circuit provides program instructions and/or data for the at least one processor.

For a technical effect brought by any one of the design manners of the third aspect to the twelfth aspect, refer to technical effects brought by the different design manners of the first aspect and the second aspect. Details are not described herein again.

### BRIEF DESCRIPTION OF DRAWINGS

FIG. 1A is a diagram of a communication system according to this application;
FIG. 1B is another diagram of a communication system according to this application;
FIG. 1C is another diagram of a communication system according to this application;
FIG. 2 is a schematic flowchart of a communication method according to this application;
FIG. 3 is an example diagram of a neighboring cell according to this application; and
FIG. 4 to FIG. 7 are several diagrams of a communication apparatus according to this application.

### DESCRIPTION OF EMBODIMENTS

The following clearly and completely describes the technical solutions in the embodiments of this application with reference to the accompanying drawings in embodiments of this application.

First, some terms in embodiments of this application are described for ease of understanding by a person skilled in the art.

### 1. Radio resource control (radio resource control, RRC) status:

In 4G and 5G cellular communication systems, a network serves a terminal on a per-cell basis. After selecting a cell (Cell), a terminal device camps on the cell, may initiate an uplink service at any time, and prepare to receive a downlink service of a network at any time. From the perspective of a radio access network, a terminal device has three different RRC states in a cell: an RRC connected (RRC_Connected) state, an RRC idle (RRC_IDLE) state, and an RRC inactive (RRC_INACTIVE) state.

RRC connected state: A terminal device establishes an RRC connection to a network, and may perform data transmission. The RRC connected state may alternatively be referred to as a connected state for short. In this specification, "connected state" and "RRC connected state" are the same concept, and the two terms are interchangeable.

For example, the terminal device, in response to network paging or actively initiates random access to establish an RRC connection with a network device for service transmission. For both the network device and a core network device, the terminal device is visible.

RRC idle state: The terminal device does not establish the RRC connection to the network, and the network device does not store a context of the terminal device. If the terminal device needs to enter the RRC connected state from the RRC idle state, the terminal device needs to initiate an RRC connection establishment process. The RRC idle state may alternatively be referred to as an idle state for short. In this specification, "idle state" and "RRC idle state" are the same concept, and the two terms are interchangeable.

For example, the terminal device camps on a cell with no ongoing service. For both the network device and the core network device, the terminal device is invisible. The terminal device monitors system broadcast and paging.

System broadcast: It is ensured that a latest system message is stored at any time, to monitor paging (paging, which triggers cell access for an uplink service) and initiate random access (random access, which actively accesses a network for an uplink service) at any time as required.

Paging: Paging includes triggering of a downlink service of a network, a system message change, a start indication of a multicast service, or the like.

RRC inactive state: The terminal device previously enters an RRC connected state. Then, a base station releases the RRC connection, but the base station stores the context of the terminal device. If the terminal device needs to enter the RRC connected state again from the RRC inactive state, the terminal device needs to initiate an RRC recovery process (or referred to as an RRC connection recovery process). Compared with the RRC establishment process, the RRC recovery process has a shorter delay and smaller signaling overheads. However, the base station needs to store the context of the terminal device, which occupies storage overheads of the base station. The RRC inactive state may alternatively be referred to as an inactive state for short. In this specification, "inactive state", "RRC inactive state", and the like are the same concept, and these terms are interchangeable.

For example, the terminal device camps on the cell with no ongoing service, and the terminal device is usually configured to enter this state when the network device releases the connected state. When the network device is invisible, for the core network device, it is still considered that the terminal device is in the connected state. A behavior of the terminal device is similar to that in the idle state. The behavior of the terminal device is mainly monitoring paging and a system message. A main difference lies in that the paging is mainly radio access network (Radio Access Network, RAN) paging sent by the network device.

### 2. Configuration and preconfiguration

In this application, both configuration and preconfiguration are used. The configuration means that a network device/server sends configuration information of some parameters or values of parameters to a terminal by using a message or signaling, so that the terminal determines a parameter for communication or a resource for transmission based on the values or the information. Similar to the configuration, the preconfiguration may be parameter information or a parameter value on which a network device/server pre-negotiates with a terminal device, or may be parameter information or a parameter value stipulated in a standard protocol and used by a base station/network device or a terminal device, or may be parameter information or a parameter value prestored on a base station/server or a terminal device. This is not limited in this application.

Further, these values and parameters may be changed or updated.

3. In this application, "used for indicating" may include used for direct indication and used for indirect indication. Indication information being described as used for indicating A may be understood as that the indication information carries A, directly indicates A, or indirectly indicates A.

In this application, information indicated by the indication information is referred to as to-be-indicated information. During specific implementation, the to-be-indicated information may be indicated in a plurality of manners. For example, the to-be-indicated information may be directly indicated, for example, the to-be-indicated information or an index of the to-be-indicated information is indicated. Alternatively, the to-be-indicated information may be implemented indirectly by indicating other information, where there is an association relationship between the other information and the to-be-indicated information. Alternatively, only a part of the to-be-indicated information may be indicated, and another part of the to-be-indicated information is known or agreed upon in advance. For example, specific information may alternatively be indicated by an arrangement sequence of a plurality of pieces of information that is pre-agreed upon (for example, stipulated in a protocol), to reduce indication overheads to some extent.

The to-be-indicated information may be sent as a whole, or may be divided into a plurality of pieces of sub-information for separate sending. In addition, sending periodicities and/or sending occasions of the sub-information may be the same or different. A specific sending method is not limited in this application. The sending periodicities and/or the sending occasions of the sub-information may be predefined, for example, predefined according to a protocol, or may be configured by a transmit-end device by sending configuration information to a receive-end device. The configuration information may include, for example, but not limited to, one or a combination of at least two of RRC signaling, medium access control (medium access control, MAC) layer signaling, and physical layer signaling. The MAC layer signaling includes, for example, a MAC CE. The physical layer signaling includes, for example, downlink control information (downlink control information, DCI).

4. In embodiments of this application, "sending" and "receiving" indicate a direction of signal transfer. In this application, an entity A sending information to an entity B may be that A directly sends the information to B, or may be that A indirectly sends the information to B through another entity. Similarly, the entity B receiving the information from the entity A may be that the entity B directly receives the information sent by the entity A, or may be that the entity B indirectly receives, through another entity, the information sent by the entity A. The entity A and the entity B herein may be a RAN node or a terminal, or may be a module within a RAN node or a terminal. The sending and receiving of the information may be information exchange between the RAN node and the terminal, for example, information exchange between the base station and the terminal. Alternatively, the sending and receiving of the information may be information exchange between two RAN nodes, for example, information exchange between a CU and a DU. Alternatively, the sending and receiving of the information may be information exchange between different modules within an apparatus, for example, information exchange between a chip of a terminal and another module of the terminal, or information exchange between a chip of a base station and another module of the base station. "Sending" may alternatively be understood as "outputting" by a chip interface, for example, a baseband chip outputs to a radio frequency chip, and "receiving" may alternatively be understood as "inputting" by the chip interface.

5. The terms "system" and "network" in embodiments of this application may be used interchangeably. "At least one" means one or more and "a plurality of" means two or more. "And/Or" describes an association relationship between associated objects, and represents that three relationships may exist. For example, "A and/or B" may represent the following cases: Only A exists, both A and B exist, and only B exists, where A and B may be singular or plural. The character "/" generally indicates an "or" relationship between the associated objects. "At least one of the following items" or a similar expression thereof indicates any combination of these items, including a single item or any combination of a plurality of items. For example, "at least one of A, B, and C" includes A, B, C, AB, AC, BC, or ABC. In addition, unless otherwise specified, the ordinal numbers such as "first" and "second" in embodiments of this application are used to distinguish a plurality of objects and are not used to define the order, timing, priority, or degree of importance of the plurality of objects.

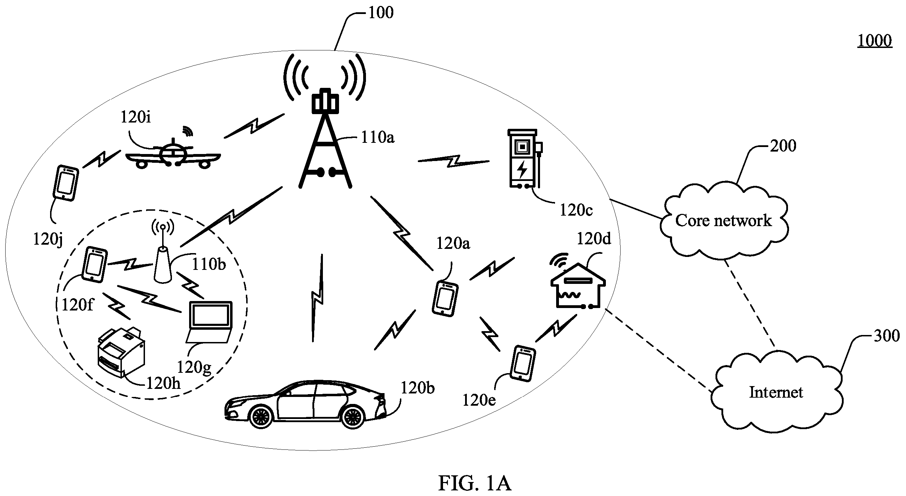

FIG. 1A is a diagram of an architecture of a communication system 1000 to which an embodiment of this application is applied. As shown in FIG. 1A, the communication system includes a radio access network (radio access network, RAN) 100 and a core network 200. Optionally, the communication system 1000 may further include an internet 300. The RAN 100 includes at least one RAN node (for example, 110a and 110b in FIG. 1A, collectively referred to as 110), and may further include at least one terminal (for example, 120a to 120j in FIG. 1A, collectively referred to as 120). The RAN 100 may further include another RAN node, for example, a wireless relay device and/or a wireless backhaul device (not shown in FIG. 1A). The terminal 120 is connected to the RAN node 110 in a wireless manner, and the RAN node 110 is connected to the core network 200 in a wireless or wired manner. A core network device in the core network 200 and the RAN node 110 in the RAN 100 may be different physical devices that are independent of each other, or may be a same physical device in which a logical function of the core network device and a logical function of the RAN node are integrated. Terminals may be connected to each other in a wired or wireless manner, and RAN nodes may be connected to each other in a wired or wireless manner.

The RAN 100 may be an evolved universal terrestrial radio access (evolved universal terrestrial radio access, E-UTRA) system, an NR system, or a future radio access system defined in 3GPP. The RAN 100 may alternatively include two or more different radio access systems. The RAN 100 may alternatively be an open RAN (open RAN, O-RAN).

The RAN node is also referred to as a radio access network device, a RAN entity, or an access node, and is configured to help the terminal to access the communication system in a wireless manner. In an application scenario, the RAN node may be a base station (base station), an evolved NodeB (evolved NodeB, eNodeB), a transmission and reception point (transmission reception point, TRP), a next generation NodeB (next generation NodeB, gNB) in a 5th generation (5th generation, 5G) mobile communication system, a next generation NodeB in a 6th generation (6th generation, 6G) mobile communication system, or a base station in a future mobile communication system. The RAN node may be a macro base station (for example, 110a in FIG. 1A), or may be a micro base station or an indoor base station (for example, 110b in FIG. 1A), or may be a relay node or a donor node.

In another application scenario, a plurality of RAN nodes may cooperate to help the terminal implement radio access, and different RAN nodes respectively implement some functions of a base station. For example, the RAN node may be a central unit (central unit, CU), a distributed unit (distributed unit, DU), or a radio unit (radio unit, RU). The CU herein implements functions of a radio resource control protocol and a packet data convergence protocol (packet data convergence protocol, PDCP) of the base station, and may further implement functions of a service data adaptation protocol (service data adaptation protocol, SDAP). The DU implements functions of a radio link control layer and a medium access control (medium access control, MAC) layer of the base station, and may further implement a part or all of functions of a physical layer. For specific descriptions of the foregoing protocol layers, refer to technical specifications related to the 3GPP generation partnership project. The RU may be configured to implement a function of receiving and sending a radio frequency signal. The CU and the DU may be two independent RAN nodes, or may be integrated into a same RAN node, for example, integrated into a baseband unit (baseband unit, BBU). The RU may be included in a radio frequency device, for example, included in a remote radio unit (remote radio unit, RRU) or an active antenna unit (active antenna unit, AAU). The CU may be further divided into two types of RAN nodes: a CU-control plane and a CU-user plane.

In different systems, the RAN node may have different names. For example, in an O-RAN system, the CU may be referred to as an open CU (open CU, O-CU), the DU may be referred to as an open DU (open DU, O-DU), and the RU may be referred to as an open RU (open RU, O-RU). The RAN node in embodiments of this application may be implemented by using a software module, a hardware module, or a combination of a software module and a hardware module. For example, the RAN node may be a server on which a corresponding software module is loaded. A specific technology and a specific device form that are used by the RAN node are not limited in embodiments of this application.

In addition, the RAN node may also be referred to as a network device, and the network device is an apparatus deployed in a radio access network to provide a wireless communication function for a terminal device. The network device may include a macro base station, a micro base station (also referred to as a small cell), a relay station, an access point, and the like in various forms. In systems using different radio access technologies, the network device may have different names, for example, an eNB or eNodeB (evolutional NodeB) in long term evolution (Long Term Evolution, LTE). The network device may alternatively be a radio controller in a cloud radio access network (cloud radio access network, CRAN) scenario. The network device may alternatively be a base station device in a future 5G network or a network device in a future evolved PLMN network. The network device may alternatively be a wearable device or an in-vehicle device. The network device may alternatively be a transmission and reception point (TRP). In addition, in a network structure, the network device may include a central unit (centralized unit, CU) node, a distributed unit (distributed unit, DU) node, or a RAN device including a CU node and a DU node. For ease of description, the base station is used as an example of the RAN node below for description.

The terminal is a device having a radio transceiver function, and may send a signal to the base station or receive a signal from the base station. The terminal may also be referred to as a terminal device, a user equipment (user equipment, UE), a mobile station, a mobile terminal, or the like. The terminal may be widely used in various scenarios, for example, device-to-device (device-to-device, D2D), vehicle to everything (vehicle to everything, V2X) communication, machine type communication (machine type communication, MTC), an internet of things (internet of things, IOT), virtual reality, augmented reality, industrial control, autonomous driving, telemedicine, a smart grid, smart furniture, a smart office, a smart wearable, smart transportation, and a smart city. The terminal may be a mobile phone, a tablet computer, a computer with a wireless transceiver function, a wearable device, a vehicle, an airplane, a ship, a robot, a robotic arm, a smart home device, or the like. A specific technology and a specific device form used by the terminal are not limited in embodiments of this application.

The base station and the terminal may be fixed or movable. The base station and the terminal may be deployed on land, including an indoor or outdoor device, a handheld device, or an in-vehicle device, or may be deployed on water, or may be deployed on an airplane, a balloon, or an artificial satellite. Application scenarios of the base station and the terminal are not limited in embodiments of this application.

Roles of the base station and the terminal may be relative. For example, a helicopter or an uncrewed aerial vehicle 120i in FIG. 1A may be configured as a mobile base station. For a terminal 120j accessing the radio access network 100 through 120i, the terminal 120i is a base station; while for a base station 110a, 120i is a terminal. To be specific, 110a and 120i communicate with each other based on a radio air interface protocol. Certainly, the communication between 110a and 120i may alternatively be performed according to on an interface protocol between base stations. In this case, for 110a, 120i is also a base station. Therefore, the base station and the terminal may be collectively referred to as communication apparatuses, 110a and 110b in FIG. 1A may be referred to as communication apparatuses having a function of the base station, and 120a to 120j in FIG. 1A may be referred to as communication apparatuses having a function of the terminal.

Communication between the base station and the terminal, between base stations, or between terminals may be performed by using a licensed spectrum, or may be performed by using an unlicensed spectrum, or may be performed by using both the licensed spectrum and the unlicensed spectrum. Communication may be performed by using a spectrum below 6 gigahertz (gigahertz, GHz), or may be performed by using a spectrum above 6 GHz, or may be performed by using both the spectrum below 6 GHz and the spectrum above 6 GHz. A spectrum resource for wireless communication is not limited in embodiments of this application.

In embodiments of this application, the function of the base station may be performed by a module (for example, a chip) in the base station, or may be performed by a control subsystem including the function of the base station. The control subsystem including the function of the base station herein may be a control center in the foregoing application scenarios such as a smart grid, industrial control, smart transportation, and a smart city. The function of the terminal may alternatively be performed by a module (for example, a chip or a modem) in the terminal, or may be performed by an apparatus including the function of the terminal.

It can be understood that, as described above, the RAN 100 includes at least one RAN node (for example, 110a and 110b in FIG. 1A, collectively referred to as 110), and may further include at least one terminal (for example, 120a to 120j in FIG. 1A, collectively referred to as 120).

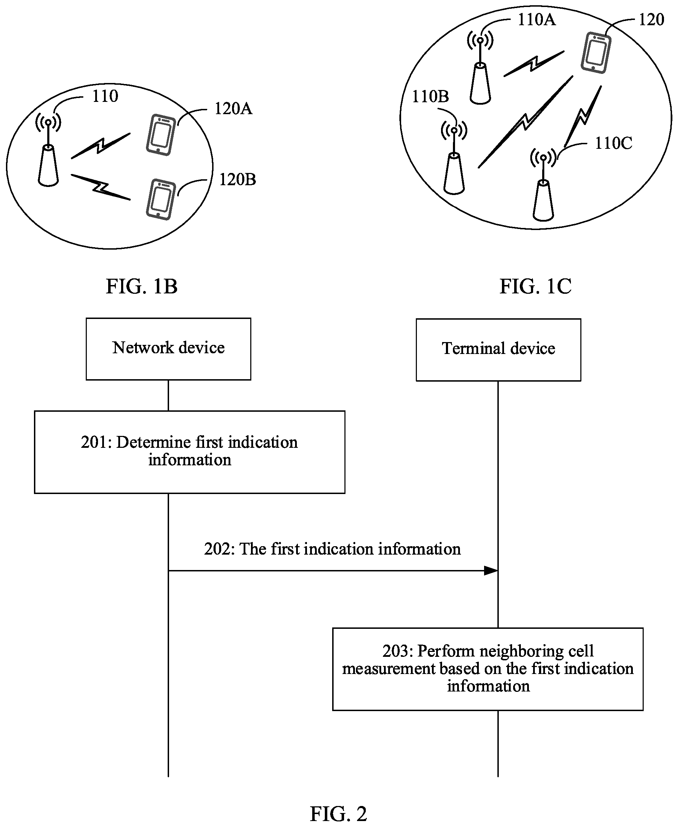

In a possible implementation, the communication system shown in FIG. 1A may alternatively include, as shown in FIG. 1B, one RAN node 110 and a plurality of terminals (for example, 120A and 120B in FIG. 1B). In this case, a single RAN node may transmit data or control signaling to one or more terminals.

In another possible implementation, the communication system shown in FIG. 1A may alternatively include, as shown in FIG. 1C, a plurality of RAN nodes (for example, 110A, 110B, and 110C in FIG. 1C) 110 and one terminal 120. In this case, the plurality of RAN nodes may alternatively simultaneously transmit data or control signaling to a single terminal.

Currently, a terminal device in an LP-WUS configuration uses a combination mode of an MR and an LR. The MR is in an ultra-deep sleep state before being woken up by the LP-WUS. A gain of the LP-WUS comes from replacing conventional PDCCH monitoring at a PO, thereby reducing power consumption. However, before monitoring the PO, the terminal device further performs operations such as measurement and cell reselection evaluation. If conventional measurement based on an SSB is still adopted, the terminal further needs to turn on or partially turn on the MR, exerting a significant impact on the gain of the WUS.

To resolve the foregoing technical problem, embodiments of this application provide a communication method and a related device. A network device indicates a WUS configuration of a neighboring cell by configuring first indication information for a terminal device, so that the terminal device may perform neighboring cell measurement by using a WUS of the neighboring cell. In this way, neighboring cell measurement may be performed in an LR state by using the first indication information, to implement operations such as cell reselection and handover measurement, thereby reducing impact of turning on the MR on a gain of the WUS.

FIG. 2 is a schematic flowchart of a communication method according to an embodiment of this application. The method may include step 201 to step 203. Step 201 to step 203 may be performed by a communication apparatus (a network device and/or a terminal device), or may be performed by some components (for example, a processor, a chip, or a chip system) in a communication apparatus, or may be implemented by a logical module or software that can implement all or a part of functions of a communication apparatus. An example in which the steps are performed by the network device and the terminal device is used below for description. Processing performed by a single execution entity in step 201 to step 203 may alternatively be performed by a plurality of execution entities, and these execution entities may be logically and/or physically separated. For example, when the communication apparatus is the network device, processing performed by the communication apparatus may be performed by at least one of a CU, a DU, and an RU. Step 201 to step 203 are described in detail below.

Step 201: The network device determines first indication information.

The network device determines the first indication information, where the first indication information is used for indicating a time domain resource of a wake-up signal WUS of a neighboring cell of the terminal device, and the first indication information is used for neighboring cell measurement by the terminal device. Alternatively, it is understood that the WUS of the neighboring cell is used for neighboring cell measurement by the terminal device.

The first indication information being used for indicating the WUS configuration of the neighboring cell may alternatively be understood as being mainly used for enabling the terminal device to receive the WUS of the neighboring cell, so as to perform neighboring cell measurement based on the WUS of the neighboring cell.

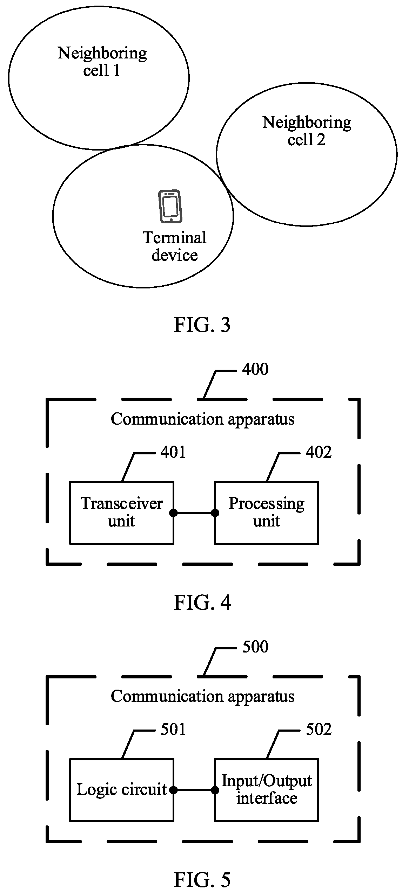

The neighboring cell may alternatively be understood as an adjacent cell, or a neighboring cell of a cell in which the terminal device is located. For example, as shown in FIG. 3, neighboring cells of the cell in which the terminal device is located include a neighboring cell 1 and a neighboring cell 2. It may be understood that FIG. 2 is only an example of the neighboring cell. During actual application, there may be more neighboring cells of the terminal device.

Neighboring cell measurement mainly means measuring one or more of the following of the neighboring cell: a reference signal receiving power (Reference Signal Receiving Power, RSRP), reference signal receiving quality (Reference Signal Receiving Quality, RSRQ), a received signal strength indicator (Received Signal Strength Indicator, RSSI), a signal to interference noise ratio (Singal to Interference Noise Ratio, SINR), or the like.

Optionally, the first indication information is further used for indicating at least one of the following: a frequency domain resource of the WUS of the neighboring cell, a code domain resource of the WUS of the neighboring cell (for example, a sequence or a sequence range used by the WUS of the neighboring cell), a correction value, or the like. When the first indication information is further used for indicating the correction value, the first indication information may alternatively be understood as being used for instructing the terminal device to use an LR with low power for neighboring cell measurement.

The terminal device includes a first receiver and a second receiver, and operating power of the first receiver is less than operating power of the second receiver. The first receiver may also be referred to as a secondary link receiver or an LR, and the second receiver may also be referred to as an MR or a high-power receiver. The correction value is used for determining a second measurement value of the second receiver that corresponds to a first measurement value of the first receiver. Alternatively, it is understood that the correction value is used for adjusting the first measurement value to obtain the second measurement value. The second measurement value is used for cell reselection or handover measurement by the terminal device. The correction value may also be referred to as an LR correction value, an offset, an offset coefficient, or the like. Alternatively, it is understood that, the terminal device may obtain a measurement value of the MR based on the LR measurement value and the correction value without turning on the MR, thereby reducing power consumption of turning on the MR by the terminal device.

Optionally, to improve correction effect, the configuration information may further indicate an application range of the correction value. The application range includes any one of the following: all neighboring cells of the terminal device, an intra-frequency neighboring cell of the terminal device, a particular neighboring cell of the terminal device, or the like. Different neighboring cells of the terminal device correspond to different correction values. Alternatively, it is understood that the LR correction value indicated by the first indication information and used by the terminal device for neighboring cell WUS measurement may be shared by all neighboring cells, or may be shared by all intra-frequency neighboring cells, or may be independently used by each cell.

Optionally, to schedule each terminal device with finer granularity, the network device may alternatively first determine a level (or referred to as an LR level) of the first receiver of the terminal device, and determine the first indication information based on the level. Different levels correspond to different correction values. Alternatively, it is understood that correction values of terminal devices of different LR levels are different.

Further, the LR level of each terminal device determined by the network device may be an LR level of each terminal device actively configured by the network device, may be an LR level reported by each terminal device, or the like. This is not specifically limited herein.

For example, the network device receives second indication information reported by the terminal device. The second indication information is used for indicating the level of the first receiver of the terminal device.

It may be understood that the higher the LR level, the higher the correction value; the higher the LR level, the lower the correction value; the lower the LR level, the higher the correction value; or the lower the LR level, the lower the correction value. This may be set according to an actual requirement, and is not specifically limited herein.

For example, a relationship between the LR level of each terminal device and the correction value may be shown in Table 1:

**Table 1**

| LR level | Correction value |
|---|---|
| 1 | a |
| 2 | b |
| 3 | c |
| 4 | d |

When the LR level is 1, the correction value is a. When the LR level is 2, the correction value is b. When the LR level is 3, the correction value is c. When the LR level is 4, the correction value is d. It may be understood that, Table 1 is only an example of the relationship between the LR level and the correction value. This may be specifically set according to an actual requirement, and is not limited herein.

The first indication information in this embodiment of this application may alternatively be understood as configuration information of the terminal device. In other words, this step may be understood as a process in which the network device determines the configuration information for the terminal device.

In addition, specific functions of the first indication information may be different based on different states of the terminal device. For example, the first indication information may be used for cell reselection by the terminal device when the terminal device is in an idle state or an inactive state. For another example, the first indication information may be used for handover measurement and the like by the terminal device when the terminal device is in a connected state. This is not specifically limited herein.

For example, in the idle state, a measurement scenario of the first indication information is cell reselection. Specifically, the network device configures a measurement range (a cell, a frequency, and the like) and a trigger condition (for example, signal quality of a serving cell being lower than a threshold) through broadcast. If the condition is satisfied, the terminal starts neighboring cell measurement. The terminal does not need to report a measurement result, and the network device does not know the measurement result. The terminal may hand over to a neighboring cell after a cell is selected.

For another example, in the connected state, in a measurement scenario of the first indication information, the network device may configure the measurement range and the trigger condition of the terminal through unicast. After measurement is triggered, the terminal performs measurement according to a requirement, and then reports a result to the network device. The network device determines, based on the result reported by the terminal, whether to hand over the terminal to another cell and which cell to hand over to. Then, the network device sends, to the terminal, an explicit handover command, including an identifier, a configuration, and the like of a target cell. The terminal accesses the target cell accordingly.

Optionally, the indication information is carried in a control channel. Specifically, the indication information may be at least one of the following: RRC signaling, MAC layer signaling, or physical layer signaling. The MAC layer signaling includes, for example, a MAC CE. The physical layer signaling includes, for example, DCI.

Step 202: The network device sends the first indication information to the terminal device.

After determining the first indication information, the network device sends the first indication information to the terminal device. Correspondingly, the terminal device receives the first indication information sent by the network device.

Step 203: The terminal device performs neighboring cell measurement based on the first indication information.

After receiving the first indication information sent by the network device, the terminal device may perform neighboring cell measurement based on the first indication information.

Optionally, after obtaining the first indication information, the terminal device may receive the WUS of the neighboring cell based on a WUS configuration of the neighboring cell indicated by the indication information, so as to perform neighboring cell measurement and the like by using the WUS of the neighboring cell.

Optionally, the configuration information further indicates the correction value and the application range of the correction value. For example, the application range of the correction value is all neighboring cells of the terminal device. The terminal device may correct WUS measurement results of all neighboring cells by using a same correction value. For another example, the application range of the correction value is the intra-frequency neighboring cell of the terminal device. The terminal device may correct WUS measurement results of all intra-frequency neighboring cells by using a same correction value. For another example, the application range of the correction value is the particular neighboring cell of the terminal device. The terminal device may correct a WUS measurement result of the particular neighboring cell by using the correction value. The terminal device may use a corrected WUS measurement result for cell reselection evaluation, handover measurement, and the like.

In this case, the terminal device may estimate a WUS measurement result of the MR based on a WUS measurement result of the LR, avoiding use of a high-power receiver (namely, the MR) for measurement to reduce power consumption. In other words, the terminal device performs neighboring cell WUS measurement by using the LR to obtain the WUS measurement result (namely, the first measurement value), and adjusts the WUS measurement result by using the correction value (for example, adds the correction value, multiplies the correction value, or divides the correction value) based on the WUS measurement result, to estimate the WUS measurement result (namely, the second measurement value) of the MR.

For example, it is assumed that the first measurement value is denoted as a, the correction value is denoted as b, and the second measurement value is denoted as c. Then, after obtaining a through neighboring cell measurement by using the LR, the terminal device obtains c based on a and the correction value b indicated by the configuration information.

Similarly, specific functions of the first indication information may be different based on different states of the terminal device. For example, the terminal device may perform cell reselection based on the first indication information when the terminal device is the idle state or the inactive state. For another example, the terminal device may perform handover measurement and the like based on the first indication information when the terminal device is in the connected state. This is not specifically limited herein.

In this embodiment of this application, the network device indicates the WUS configuration of the neighboring cell by configuring the first indication information for the terminal device, so that the terminal device may perform neighboring cell measurement by using the WUS of the neighboring cell. In this way, neighboring cell measurement may be performed in an LR state by using the first indication information, to implement operations such as cell reselection and handover measurement, thereby reducing impact of turning on the MR on a gain of the WUS.

The foregoing describes the communication method in embodiments of this application. The following describes a communication apparatus in embodiments of this application. FIG. 4 shows an embodiment of a communication apparatus 400 in embodiments of this application. The communication apparatus 400 may implement functions of the network device or the terminal device in the foregoing method embodiment, and therefore can also achieve the beneficial effects of the foregoing method embodiment. In this embodiment of this application, the communication apparatus 400 may be a communication apparatus, or may be an integrated circuit or element, such as a chip, inside a communication apparatus. The communication apparatus 400 includes a transceiver unit 401 and a processing unit 402.

In a possible implementation, the communication apparatus 400 is the network device in embodiments shown in FIG. 1A to FIG. 3. In this case, functions of the units are as follows:
The processing unit 402 is configured to determine first indication information, where the first indication information is at least used for indicating a time domain resource of a wake-up signal WUS of a neighboring cell of a terminal device, and the first indication information is used for neighboring cell measurement by the terminal device.

The transceiver unit 401 is configured to send the first indication information.

Optionally, the terminal device includes a first receiver and a second receiver, and operating power of the first receiver is less than operating power of the second receiver. The first indication information is further used for indicating a correction value, the correction value is used for determining a second measurement value of the second receiver that corresponds to a first measurement value of the first receiver, and the second measurement value is used for cell reselection or handover measurement by the terminal device.

Optionally, the first indication information is further used for indicating an application range of the correction value, and the application range includes any one of the following: all neighboring cells of the terminal device or an intra-frequency neighboring cell of the terminal device.

Optionally, different neighboring cells of the terminal device correspond to different correction values.

Optionally, the processing unit 402 is further configured to determine a level of a first receiver of the terminal device, where different levels correspond to different correction values. The processing unit 402 is specifically configured to determine the first indication information based on the level.

Optionally, the transceiver unit 401 is further configured to receive second indication information, where the second indication information is used for indicating the level of the first receiver of the terminal device. The processing unit 402 is specifically configured to determine the level based on the second indication information.

Optionally, the first indication information is used for cell reselection by the terminal device when the terminal device is in an idle state or an inactive state.

Optionally, the first indication information is used for handover measurement by the terminal device when the terminal device is in a connected state.

Optionally, the first indication information is further used for indicating at least one of the following: a frequency domain resource of the WUS or a code domain resource of the WUS.

In this embodiment, operations performed by the units in the communication apparatus are similar to the descriptions of the network device in embodiments shown in FIG. 1A to FIG. 3. Details are not described herein again.

In this embodiment, the processing unit 402 indicates a WUS configuration of the neighboring cell by configuring the first indication information for the terminal device, so that the terminal device may perform neighboring cell measurement by using the WUS of the neighboring cell. In this way, the terminal device may perform, in an LR state, neighboring cell measurement by using the first indication information, to implement operations such as cell reselection and handover measurement, thereby reducing impact of turning on an MR on a gain of the WUS.

In another possible implementation, the communication apparatus 400 is the terminal device in embodiments shown in FIG. 1A to FIG. 3. In this case, functions of the units are as follows:
The transceiver unit 401 is configured to receive first indication information, where the first indication information includes at least a time domain resource of a wake-up signal WUS of a neighboring cell of a terminal device.

The processing unit 402 is configured to perform neighboring cell measurement based on the first indication information.

Optionally, the terminal device includes a first receiver and a second receiver, and operating power of the first receiver is less than operating power of the second receiver. The first indication information is further used for indicating a correction value, the correction value is used for determining a second measurement value of the second receiver that corresponds to a first measurement value of the first receiver, and the second measurement value is used for cell reselection or handover measurement by the terminal device.

Optionally, the first indication information is further used for indicating an application range of the correction value, and the application range includes any one of the following: all neighboring cells of the terminal device or an intra-frequency neighboring cell of the terminal device.

Optionally, different neighboring cells of the terminal device correspond to different correction values.

Optionally, the transceiver unit 401 is further configured to send second indication information, where the second indication information is used for indicating a level of a first receiver of the terminal device, different levels correspond to different correction values, and the second indication information is associated with the first indication information.

Optionally, the first indication information is used for cell reselection by the terminal device when the terminal device is in an idle state or an inactive state.

Optionally, the first indication information is used for handover measurement by the terminal device when the terminal device is in a connected state.

Optionally, the first indication information is further used for indicating at least one of the following: a frequency domain resource of the WUS or a code domain resource of the WUS.

In this embodiment, operations performed by the units in the communication apparatus are similar to the descriptions of the terminal device in embodiments shown in FIG. 1A to FIG. 3. Details are not described herein again.

In this embodiment, the processing unit 402 may perform neighboring cell measurement by using the first indication information. In this way, neighboring cell measurement may be performed in an LR state by using the first indication information, to implement operations such as cell reselection and handover measurement, thereby reducing impact of turning on the MR on a gain of the WUS.

FIG. 5 is another diagram of a structure of a communication apparatus 500 according to this application. The communication apparatus 500 includes a logic circuit 501 and an input/output interface 502. The communication apparatus 500 may be a chip or an integrated circuit.

The transceiver unit 401 shown in FIG. 4 may be a communication interface. The communication interface may be the input/output interface 502 in FIG. 5. The input/output interface 502 may include an input interface and an output interface. Alternatively, the communication interface may be a transceiver circuit, and the transceiver circuit may include an input interface circuit and an output interface circuit. The processing unit 402 shown in FIG. 4 may be the logic circuit 501 in FIG. 5.

Optionally, when the communication apparatus is the network device in the foregoing embodiments, the logic circuit 501 is configured to determine first indication information. The input/output interface 502 is configured to send the first indication information and receive second indication information.

Optionally, when the communication apparatus is the terminal device in the foregoing embodiments, the input/output interface 502 is configured to receive the first indication information and send the second indication information. The logic circuit 501 is configured to perform neighboring cell measurement based on the first indication information.

The logic circuit 501 and the input/output interface 502 may alternatively perform other steps performed by the network device or the terminal device in any embodiment and achieve corresponding beneficial effects. Details are not described herein again.

Optionally, the logic circuit 501 may be a processing apparatus, and a part or all of functions of the processing apparatus may be implemented by software. A part or all of functions of the processing apparatus may be implemented by software.

Optionally, the processing apparatus may include a memory and a processor. The memory is configured to store a computer program. The processor reads and executes the computer program stored in the memory, to perform corresponding processing and/or steps in any one of the method embodiments.

Optionally, the processing apparatus may include only a processor. The memory configured to store the computer program is located outside the processing apparatus, and the processor is connected to the memory through a circuit/electric line, to read and execute the computer program stored in the memory. The memory and the processor may be integrated, or may be physically independent of each other.

Optionally, the processing apparatus may be one or more chips, or one or more integrated circuits. For example, the processing apparatus may be one or more field programmable gate arrays (field-programmable gate arrays, FPGAs), an application-specific integrated chip (application specific integrated circuit, ASIC), a system-on-chip (system on chip, SoC), a central processing unit (central processor unit, CPU), a network processor (network processor, NP), a digital signal processing circuit (digital signal processor, DSP), a microcontroller (micro controller unit, MCU), a programmable controller (programmable logic device, PLD), or another integrated chip, or any combination of the foregoing chips or processors.

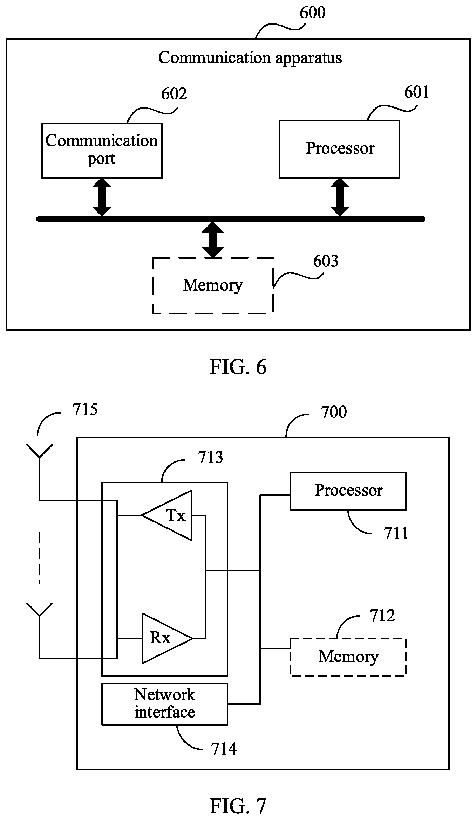

FIG. 6 shows a communication apparatus 600 in the foregoing embodiments according to an embodiment of this application. The communication apparatus 600 may be specifically a communication apparatus serving as a terminal device in the foregoing embodiments.

In a diagram of a possible logical structure of the communication apparatus 600, the communication apparatus 600 may include but is not limited to at least one processor 601 and a communication port 602.

The transceiver unit 401 shown in FIG. 4 may be a communication interface, the communication interface may be the communication port 602 in FIG. 6, and the communication port 602 may include an input interface and an output interface. Alternatively, the communication port 602 may be a transceiver circuit, and the transceiver circuit may include an input interface circuit and an output interface circuit.

It may be understood that the communication port 602 in FIG. 6 may be configured to transmit indication information. For example, when the communication apparatus 600 is the network device in the foregoing embodiments, the communication port 602 is configured to send first indication information and receive second indication information. For another example, when the communication apparatus 600 is the terminal device in the foregoing embodiments, the communication port 602 is configured to receive the first indication information and send the second indication information.

Further, optionally, the apparatus may further include at least one of a memory 603 and a bus. In this embodiment of this application, the at least one processor 601 is configured to control an action of the communication apparatus 600.

In addition, the processor 601 may be a central processing unit, a general-purpose processor, a digital signal processor, an application-specific integrated circuit, a field programmable gate array or another programmable logic device, a transistor logic device, a hardware component, or any combination thereof. The processor may implement or execute various examples of logical blocks, modules, and circuits described with reference to content disclosed in this application. Alternatively, the processor may be a combination of processors for implementing a computing function, for example, a combination of one or more microprocessors, or a combination of a digital signal processor and a microprocessor. A person skilled in the art may clearly understand that, for convenience and conciseness of description, for detailed work processes of the foregoing systems, apparatuses, and units, refer to the corresponding processes in the foregoing method embodiments. Details are not described herein again.

It should be noted that the communication apparatus 600 shown in FIG. 6 may be specifically configured to implement the steps implemented by the terminal device in the foregoing method embodiments, and achieve the technical effects corresponding to the terminal device. For a specific implementation of the communication apparatus shown in FIG. 6, refer to the descriptions in the foregoing method embodiments. Details are not described herein again.

FIG. 7 is a diagram of a structure of a communication apparatus 700 in the foregoing embodiments according to an embodiment of this application. The communication apparatus 700 may be specifically a communication apparatus serving as a network device in the foregoing embodiments. For a structure of the communication apparatus, refer to the structure shown in FIG. 7.

The communication apparatus 700 includes at least one processor 711 and at least one network interface 714. Further, optionally, the communication apparatus further includes at least one memory 712, at least one transceiver 713, and one or more antennas 715. The processor 711, the memory 712, the transceiver 713, and the network interface 714 are connected, for example, through a bus. In this embodiment of this application, the connection may include various interfaces, transmission lines, buses, or the like. This is not limited in this embodiment. The antenna 715 is connected to the transceiver 713. The network interface 714 is configured to enable the communication apparatus to communicate with another communication device through a communication link. For example, the network interface 714 may include a network interface between the communication apparatus and a core network device, for example, an S1 interface. The network interface may include a network interface between the communication apparatus and another communication apparatus (for example, another network device or core network device), for example, an X2 or Xn interface.

The transceiver unit 401 shown in FIG. 4 may be a communication interface, the communication interface may be the network interface 714 in FIG. 7, and the network interface 714 may include an input interface and an output interface. Alternatively, the network interface 714 may be a transceiver circuit, and the transceiver circuit may include an input interface circuit and an output interface circuit.

The processor 711 is mainly configured to process a communication protocol and communication data, control the entire communication apparatus, execute a software program, and process data of the software program, for example, is configured to support the communication apparatus in performing actions described in embodiments. The communication apparatus may include a baseband processor and a central processing unit. The baseband processor is mainly configured to process the communication protocol and the communication data. The central processing unit is mainly configured to control the entire communication apparatus, execute the software program, and process the data of the software program. Functions of the baseband processor and the central processing unit may be integrated into the processor 711 in FIG. 7. A person skilled in the art can understand that the baseband processor and the central processing unit may alternatively be processors independent of each other, and are interconnected through a technology like a bus. A person skilled in the art can understand that the communication apparatus may include a plurality of baseband processors to adapt to different network standards, the communication apparatus may include a plurality of central processing units to enhance a processing capability of the communication apparatus, and components of the communication apparatus may be connected through various buses. The baseband processor may alternatively be expressed as a baseband processing circuit or a baseband processing chip. The central processing unit may alternatively be expressed as a central processing circuit or a central processing chip. A function of processing the communication protocol and the communication data may be built in the processor, or may be stored in the memory in a form of a software program, and the processor executes the software program to implement a baseband processing function.

The memory is mainly configured to store a software program and data. The memory 712 may exist independently, and is connected to the processor 711. Optionally, the memory 712 may be integrated with the processor 711, for example, integrated into one chip. The memory 712 can store program code for performing the technical solutions in embodiments of this application, and execution of the program code is controlled by the processor 711. Various types of executed computer program code may alternatively be considered as a driver of the processor 711.

FIG. 7 shows only one memory and one processor. An actual communication apparatus may include a plurality of processors and a plurality of memories. The memory may alternatively be referred to as a storage medium, a storage device, or the like. The memory may be a storage element on a same chip as the processor, that is, an on-chip storage element, or may be an independent storage element. This is not limited in this embodiment of this application.

The transceiver 713 may be configured to support receiving or sending of a radio frequency signal between the communication apparatus and a terminal. The transceiver 713 may be connected to the antenna 715. The transceiver 713 may include a transmitter Tx and a receiver Rx. Specifically, the one or more antennas 715 may receive a radio frequency signal. The receiver Rx of the transceiver 713 is configured to receive the radio frequency signal from the antenna, convert the radio frequency signal into a digital baseband signal or a digital intermediate frequency signal, and provide the digital baseband signal or the digital intermediate frequency signal for the processor 711, so that the processor 711 further processes the digital baseband signal or the digital intermediate frequency signal, for example, performs demodulation and decoding. In addition, the transmitter Tx of the transceiver 713 is further configured to receive a modulated digital baseband signal or digital intermediate frequency signal from the processor 711, convert the modulated digital baseband signal or digital intermediate frequency signal into a radio frequency signal, and send the radio frequency signal through the one or more antennas 715. Specifically, the receiver Rx may selectively perform one-level or multi-level down frequency mixing and analog-to-digital conversion on the radio frequency signal to obtain the digital baseband signal or the digital intermediate frequency signal. An order of the down frequency mixing and the analog-to-digital conversion is adjustable. The transmitter Tx may selectively perform one-level or multi-level up frequency mixing and digital-to-analog conversion on the modulated digital baseband signal or digital intermediate frequency signal to obtain the radio frequency signal. An order of the up frequency mixing and the digital-to-analog conversion is adjustable. The digital baseband signal and the digital intermediate frequency signal may be collectively referred to as digital signals.

The transceiver 713 may alternatively be referred to as a transceiver unit, a transceiver, a transceiver apparatus, or the like. Optionally, a component in the transceiver unit configured to implement a receiving function may be considered as a receiving unit, and a component in the transceiver unit configured to implement a sending function may be considered as a sending unit. That is, the transceiver unit includes the receiving unit and the sending unit. The receiving unit may also be referred to as a receiver, an input interface, a receiver circuit, or the like. The sending unit may be referred to as a transmitting device, a transmitter, a transmitter circuit, or the like.

It should be noted that the communication apparatus 700 shown in FIG. 7 may be specifically configured to implement the steps implemented by the network device in the foregoing method embodiments, and achieve the technical effects corresponding to the network device. For a specific implementation of the communication apparatus 700 shown in FIG. 7, refer to the descriptions in the foregoing method embodiments. Details are not described herein again.

When the communication apparatus is a chip used in the terminal, the terminal chip implements functions of the terminal in foregoing method embodiments. The terminal chip receives information from another module (for example, a radio frequency module or an antenna) in the terminal, where the information is sent by the base station to the terminal; or the terminal chip sends information to another module (for example, a radio frequency module or an antenna) in the terminal, where the information is sent by the terminal to the base station. For example, when the network device is a terminal, the terminal sending the indication information may be understood as a process in which a chip of the terminal outputs the indication information.

When the foregoing communication apparatus is a module used for a base station, the module in the base station implements the functions of the base station in the foregoing method embodiments. The module in the base station receives information from another module (for example, the radio frequency module or the antenna) in the base station, where the information is sent by the terminal to the base station; or the module in the base station sends information to another module (for example, the radio frequency module or the antenna) in the base station, where the information is sent by the base station to the terminal. The module in the base station herein may be a baseband chip in the base station, or may be a DU or another module. The DU herein may be a DU in an open radio access network (open radio access network, O-RAN) architecture. For example, when the network device is a base station, the base station sending the indication information may be understood as a process in which a chip of the base station outputs the indication information.

The method steps in embodiments of this application may be implemented by hardware, or may be implemented by using software instructions that may be executed by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. An example storage medium is coupled to a processor, so that the processor can read information from the storage medium or write information into the storage medium. The storage medium may alternatively be a component of the processor. The processor and the storage medium may be located in an ASIC. In addition, the ASIC may be located in the base station or the terminal. The processor and the storage medium may exist in the base station or the terminal as discrete components.

All or some of the foregoing embodiments may be implemented by using software, hardware, firmware, or any combination thereof. When the software is used for implementation, some or all of the embodiments may be implemented in a form of a computer program product. The computer program product includes one or more computer programs or instructions. When the computer programs or the instructions are loaded and executed on a computer, procedures or functions in embodiments of this application are all or partially executed. The computer may be a general-purpose computer, a dedicated computer, a computer network, a network device, user equipment, or another programmable apparatus. The computer programs or the instructions may be stored in a computer-readable storage medium, or may be transmitted from a computer-readable storage medium to another computer-readable storage medium. For example, the computer programs or the instructions may be transmitted from a website, computer, server, or data center to another website, computer, server, or data center in a wired or wireless manner. The computer-readable storage medium may be any usable medium that can be accessed by the computer, or a data storage device, such as a server or a data center, integrating one or more usable media. The usable medium may be a magnetic medium, such as a floppy disk, a hard disk, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In embodiments of this application, unless otherwise stated or there is a logic conflict, terms and/or descriptions in different embodiments are consistent and may be mutually referenced, and technical features in different embodiments may be combined based on an internal logical relationship thereof, to form new embodiments.

## Claims

1. A communication method, comprising:
determining first indication information, wherein the first indication information is at least used for indicating a time domain resource of a wake-up signal WUS of a neighboring cell of a terminal device, and the first indication information is used for neighboring cell measurement by the terminal device; and
sending the first indication information.

2. The method according to claim 1, wherein the terminal device comprises a first receiver and a second receiver, and operating power of the first receiver is less than operating power of the second receiver; and the first indication information is further used for indicating a correction value, the correction value is used for determining a second measurement value of the second receiver that corresponds to a first measurement value of the first receiver, and the second measurement value is used for cell reselection or handover measurement by the terminal device.

3. The method according to claim 2, wherein the first indication information is further used for indicating an application range of the correction value, and the application range comprises any one of the following: all neighboring cells of the terminal device or an intra-frequency neighboring cell of the terminal device.

4. The method according to claim 2, wherein different neighboring cells of the terminal device correspond to different correction values.

5. The method according to any one of claims 2 to 4, further comprising:
determining a level of the first receiver of the terminal device, wherein different levels correspond to different correction values; and
the determining first indication information comprises:
determining the first indication information based on the level.

6. The method according to claim 5, wherein before the determining a level of the first receiver of the terminal device, the method further comprises:
receiving second indication information, wherein the second indication information is used for indicating the level of the first receiver of the terminal device; and
determining the level based on the second indication information.

7. The method according to any one of claims 1 to 6, wherein the first indication information is used for cell reselection by the terminal device when the terminal device is in an idle state or an inactive state.

8. The method according to any one of claims 1 to 6, wherein the first indication information is used for handover measurement by the terminal device when the terminal device is in a connected state.

9. The method according to any one of claims 1 to 8, wherein the first indication information is further used for indicating at least one of the following: a frequency domain resource of the WUS or a code domain resource of the WUS.

10. A communication method, comprising:
receiving first indication information, wherein the first indication information comprises at least a time domain resource of a wake-up signal WUS of a neighboring cell of a terminal device; and
performing neighboring cell measurement based on the first indication information.

11. The method according to claim 10, wherein the terminal device comprises a first receiver and a second receiver, and operating power of the first receiver is less than operating power of the second receiver; and the first indication information is further used for indicating a correction value, the correction value is used for determining a second measurement value of the second receiver that corresponds to a first measurement value of the first receiver, and the second measurement value is used for cell reselection or handover measurement by the terminal device.

12. The method according to claim 11, wherein the first indication information is further used for indicating an application range of the correction value, and the application range comprises any one of the following: all neighboring cells of the terminal device or an intra-frequency neighboring cell of the terminal device.

13. The method according to claim 11, wherein different neighboring cells of the terminal device correspond to different correction values.

14. The method according to any one of claims 11 to 13, further comprising:
sending second indication information, wherein the second indication information is used for indicating a level of the first receiver of the terminal device, different levels correspond to different correction values, and the second indication information is associated with the first indication information.

15. The method according to any one of claims 10 to 14, wherein the first indication information is used for cell reselection by the terminal device when the terminal device is in an idle state or an inactive state.

16. The method according to any one of claims 10 to 14, wherein the first indication information is used for handover measurement by the terminal device when the terminal device is in a connected state.

17. The method according to any one of claims 10 to 16, wherein the first indication information is further used for indicating at least one of the following: a frequency domain resource of the WUS or a code domain resource of the WUS.

18. A communication apparatus, wherein the communication apparatus comprises a processing unit and a transceiver unit; and
the processing unit and the transceiver unit are configured to perform the method according to any one of claims 1 to 17.

19. A communication apparatus, comprising at least one processor, wherein the at least one processor is coupled to a memory, and the at least one processor is configured to perform the method according to any one of claims 1 to 17.

20. A chip, configured to perform the method according to any one of claims 1 to 17.

21. A communication system, comprising a communication apparatus configured to perform the method according to any one of claims 1 to 9, and a communication apparatus configured to perform the method according to any one of claims 10 to 17.

22. A readable storage medium, wherein the storage medium stores a computer program or instructions, and when the computer program or the instructions are executed by a communication apparatus, the method according to any one of claims 1 to 17 is implemented.

23. A computer program product, comprising instructions, wherein when instructions are run on a computer, the computer is enabled to perform the method according to any one of claims 1 to 17.
